# EUROPÄISCHE PATENTSCHRIFT

(11) **EP 2 548 281 B1**
(45) Veröffentlichungstag und Bekanntmachung des Hinweises auf die Patenterteilung: **16.08.2017**
(21) Anmeldenummer: 11709371.6
(22) Anmeldetag: 10.03.2011
(51) Int. Cl.: H02J 7/00, H02J 7/34

(54) **VERFAHREN ZUM LADUNGSAUSGLEICH IN EINEM BATTERIESYSTEM UND BATTERIESYSTEM MIT EINER LADUNGSAUSGLEICHSSCHALTUNG**
METHOD FOR CHARGE EQUALIZATION IN A BATTERY SYSTEM AND BATTERY SYSTEM HAVING A CHARGE EQUALIZATION CIRCUIT
PROCÉDÉ DE COMPENSATION DE CHARGES DANS UN SYSTÈME DE BATTERIES ET SYSTÈME DE BATTERIES MUNI D'UN CIRCUIT DE COMPENSATION DE CHARGE

(30) Priorität: 13.03.2010 DE 102010011279
(43) Veröffentlichungstag der Anmeldung: 23.01.2013
(73) Patentinhaber: Continental Automotive GmbH, 30165 Hannover (DE)
(72) Erfinder: KARRER, Volker, 93055 Regensburg (DE); REICH, Alexander, 93098 Mintraching (DE)
(86) Internationale Anmeldenummer: PCT/EP2011/053577
(87) Internationale Veröffentlichungsnummer: WO 2011/113735

(56) Entgegenhaltungen:
- EP-A2- 2 352 218
- US-A1- 2005 077 879
- US-A1- 2010 237 830
- US-B1- 6 222 344

## Beschreibung

Die Erfindung betrifft ein Verfahren zum Ladungsausgleich in einem Batteriesystem. Ferner betrifft die Erfindung ein Batteriesystem mit einer Ladungsausgleichsschaltung.

Batteriesysteme mögen unterschiedlich aufgebaut sein und betrieben werden. Insbesondere mögen Batteriesysteme aus einer Vielzahl von Zellen bestehen, welche gänzlich oder zum Teil in Serie geschaltet sind. Je nach Art der Anwendung mag ein Teil der seriell geschalteten Zellen in Blöcken parallel geschaltet sein. Es ist bekannt, dass Zellen unterschiedliche interne Parameter aufweisen, weshalb verschiedene Zellen ein unterschiedliches Ladeverhalten und ein unterschiedliches Entladeverhalten zeigen mögen. Deshalb mag es ein Bedürfnis nach einem Batteriesystem geben, das so eingerichtet ist, dass dem unterschiedlichen Lade- und Entladeverhalten der verschiedenen Zellen Rechnung getragen werden mag. Ferner mag es ein Bedürfnis nach einem Verfahren zum Ändern des Ladungszustands innerhalb eines Batteriesystems geben, wobei mit dem Verfahren dem unterschiedlichen Lade- und Entladeverhalten der verschiedenen Zellen im Batteriesystem Rechnung getragen werden mag.

Die Druckschrift DE 10 2006 002 414 beschreibt, zum Ladungsausgleich einen Kondensator über einen spannungserhöhenden Spannungswandler zu laden und die Ladung des geladenen Kondensator bei so erhöhter Spannung abzugeben.

Die nachveröffentlichte Druckschrift EP 2 352 218 A2 beschreibt einen Spannungsausgleich zwischen Zellen einer Zellenreihenschaltung mittels eines Ausgleichskondensators, der abwechselnd parallel an eine Zelle und parallel an die Zellenreihenschaltung angeschlossen wird.

Der Erfindung mag als Aufgabe zugrunde liegen, ein Verfahren zum Ladungsausgleich in einem Batteriesystem und ein Batteriesystem mit einer Ladungsausgleichsschaltung zu schaffen, mit welchen die enthaltenen Zellen auf günstige Weise geladen und entladen werden mögen.

Diese Aufgabe wird gelöst durch den Gegenstand der unabhängigen Patentansprüche. Vorteilhafte Ausführungsformen sind in den abhängigen Ansprüchen beschrieben.

Gemäß einem Aspekt wird ein Verfahren zum Ladungsausgleich zwischen zwei Zellen eines Zellverbundes eines Batteriesystems geschaffen, wobei die Zellen eine Ruhespannung haben. Das Batteriesystem weist eine Ladungsausgleichsschaltung und einen Energiezwischenspeicher auf, wobei die Ladungsausgleichsschaltung zwischen den Zellverbund und den Energiezwischenspeicher geschaltet ist. Das Verfahren weist auf: Bringen der Ladungsausgleichsschaltung in einen ersten Zustand, in welchem der Energiezwischenspeicher über die Ladungsausgleichsschaltung geladen wird. Bringen der Ladungsausgleichsschaltung in einen zweiten Zustand, in welchem der Energiezwischenspeicher eine der zwei Zellen mittels einer bereitgestellten Aufladespannung auflädt, wobei die mittels des Energiezwischenspeichers an der einen Zelle bereitgestellte Aufladespannung höher als jede der beiden Zellenruhespannungen ist. Insbesondere mag der Ladungsausgleich zwischen zwei Zellen eines Zellverbundes durchgeführt werden, d.h. eine erste Zelle mag die Energie liefern, welche auf eine zweite Zelle übertragen wird. Insbesondere mag auch der Fall, dass der gesamte Zellverbund die Energie liefert, welche verwendet wird, um eine Zelle des Zellverbundes aufzuladen, unter einem Ladungsausgleich zwischen zwei Zellen aufgefasst werden, da auch dann ein Ladungsausgleich zwischen zumindest zwei Zellen des Zellverbundes stattfinden mag.

Der Begriff "Ladungsausgleich" mag ein Verschieben von elektrischen Ladungen zwischen zwei Zellen eines Batteriesystems oder zwischen zwei Zellenblöcken eines Batteriesystems bezeichnen. Insbesondere mag der Ladungsausgleich im Zusammenhang mit einem Spannungsausgleich auftreten.

Der Begriff "Zelle" mag einen chemischen Speicher für elektrische Energie bezeichnen. Demzufolge mag der Begriff "Zelle" abgekürzt ausgedrückt einen elektro-chemischen Speicher bezeichnen. In einem weiten Sinn mag der Begriff "Zelle" konkret eine gebräuchliche oder handelsübliche Batterie bezeichnen, welche insbesondere eine wiederaufladbare Batterie sein mag. In einem engeren Sinn mag der Begriff "Zelle" konkret eine Voltasche Säule bezeichnen. In einem noch engeren Sinn mag der Begriff "Zelle" auch eine elektrochemische Elementarzelle bezeichnen. Danach mag die elektrochemische Elementarzelle zwei Elektroden aufweisen, welche in einen Elektrolyten eintauchen. Damit sich die Elektroden nicht berühren, mag sich zwischen den Elektroden ein Separator befinden, welcher einen Ionenstrom im Elektrolyten erlauben mag. Batteriesysteme mögen entsprechend den grundlegenden Typen elektrochemischer Zellen, nach denen die Batteriesysteme benannt sein mögen, beispielsweise Bleibatterien, NiCd-Batterien, NiMH-Batterien oder Lithium-Ionen-Batterien sein. Insbesondere mögen auch Batterien verwendet werden, welche auf Lithium und/oder einem anderen Element basieren, beispielsweise LiFe-Batterien.

Der Begriff "Zellverbund" mag eine elektrische Verbindung von Zellen bezeichnen, welche untereinander in beliebiger serieller und/oder paralleler Weise gekoppelt sein mögen.

Der Begriff "Zellenruhespannung" mag die tatsächliche zu einem Zeitpunkt an den Elektroden einer Zelle anliegende elektrische Potentialdifferenz in einem nicht belasteten Zustand bezeichnen. Damit mag die Zellenruhespannung eine Gleichgewichtsspannung und die durch interne Vorgänge in der Zelle auftretende Spannungen, welche beispielsweise durch eine Selbstentladung verursacht werden mögen, einbeziehen. In einem engeren Sinn mag die Zellenruhespannung der Gleichgewichtsspannung entsprechen, wenn von den entsprechenden zusätzlichen Spannungen abgesehen werden mag. Alternativ mag die Zellenruhespannung durch die Zellennennspannung charakterisierbar oder definierbar sein.

Der Begriff "Batteriesystem" mag eine Anordnung von Zellen bezeichnen, welche unterschiedlich verschaltet sein mögen. Das Batteriesystem mag also einen Zellverbund aufweisen. Gleichzeitig mag das Batteriesystem im Wesentlichen eine Gleichstromquelle darstellen. Insbesondere mag das Batteriesystem aus Zellen aufgebaut sein, welche als so genannte Sekundärzellen bezeichnet werden mögen und welche folglich eine physikalische Grundlage für ein Entladen als auch für ein Laden des Batteriesystems darstellen mögen. Für den Begriff "Sekundärzelle" mag auch der Begriff "Sekundärelement" ein Synonym sein. Das Batteriesystem mag so eingerichtet sein, dass der Energiezwischenspeicher in Verbindung mit der Ladungsausgleichsschaltung eine Änderung des Ladungszustands einer oder mehrerer Zellen herbeiführen mag. Insbesondere mag der Ladungszustand zwischen den Zellen bzw. im Zellverbund, regelbar oder steuerbar sein.

Der Begriff "Ladungsausgleichsschaltung" mag eine veränderbare oder schaltbare elektrische Vorrichtung bezeichnen, über welche elektrische Ladungen verschoben oder übertragen werden mögen.

Der Begriff "Energiezwischenspeicher" mag eine Vorrichtung bezeichnen, welche elektrische Energie zu speichern vermag. Insbesondere mag als Basis für den Energiespeicher eine kapazitive oder elektro-chemische Speicherung von Energie dienen. Auch mag der Energiezwischenspeicher eine beliebige Auswahl von kapazitiver und elektro-chemischer Speicherung von Energie aufweisen.

Der Begriff "geschaltet" mag eine elektrische Koppelung bezeichnen, welche veränderbar ist. Insbesondere mag beispielsweise mittels der Ladungsausgleichsschaltung die elektrische Koppelung zwischen dem Zellverbund und dem Energiezwischenspeicher schaltbar bzw. veränderbar sein. Insbesondere mag in diesem Zusammenhang der Begriff "Zustand" oder "Zustand der Ladungsausgleichsschaltung" eine spezifische, veränderbare elektrische Koppelung zwischen dem Zellverbund und dem Energiezwischenspeicher bezeichnen.

Der Begriff "Aufladespannung" mag die anliegende elektrische Potentialdifferenz bezeichnen, welche der Energiezwischenspeicher nach seinem Aufladen und vor seinem Entladen aufweist, beispielsweise zwischen zwei Anschlussterminals.

Gemäß einem Aspekt mag ein Ladungsausgleich zwischen zwei oder mehr Zellen eines Batteriesystems, welcher zusammen mit einem Spannungsausgleich auftreten mag, mittels einer zwischen zwei Terminals eines Energiezwischenspeichers anliegenden Aufladespannung verursacht werden. Der Energiezwischenspeicher mag geladen werden, wenn sich die Ladungsausgleichsschaltung in einer ersten Position oder einem ersten Zustand befindet. Wenn die Ladungsausgleichsschaltung eine zweite Position oder einen zweiten Zustand einnimmt, mag sich der Energiezwischenspeicher zu einer oder mehreren Zellen entladen. Die anliegende bzw. bereitgestellte Aufladespannung am Energiezwischenspeicher nach seinem Aufladen mittels einer oder mehrerer Zellen und vor seinem Entladen mag größer sein als jede der Zellenruhespannungen der Zellen, welche an den Ladungsausgleich beteiligt sind, entweder zum Aufladen der Energiezwischenspeichers oder zum Aufnehmen der Energie oder Ladung des Energiezwischenspeichers. Der Ladungsausgleich, welcher beim Aufladen einer Zelle des Zellenverbunds stattfinden mag, mag also auf einer Spannungsdifferenz zwischen dem Energiezwischenspeicher und der jeweiligen Zelle basieren, welcher von einer oder mehreren Zellen gespeist werden mag. Insbesondere mag die Potentialdifferenz an zwei Anschlüssen des Energiezwischenspeichers jede einzelne Zellenruhespannung übersteigen.

Insbesondere mag also die Aufladespannung zwischen zwei Ausgangsterminals oder Ausgangsanschlüssen des Energiezwischenspeichers anliegen, bevor das Aufladen der Zelle zum Ladungsausgleich erfolgt. Insbesondere mag die bereitgestellte Auf ladespannung zum Zeitpunkt des Aufladens der einen Zelle höher als jede der beiden Zellenruhespannungen sein, beispielsweise zum Beginn des Aufladens.

Insbesondere mögen die Zellen einen Zellverbund bilden, welcher auch mehr als zwei Zellen aufweisen mag. Der Energiezwischenspeicher mag insbesondere mittels des gesamten Zellverbundes, einiger Zellen des Zellenverbundes oder einer einzelnen Zelle des Zellenverbundes geladen werden, d.h. die Energie, mit der der Energiezwischenspeicher über die Ladungsausgleichsschaltung geladen wird, mag vom Zellverbund bereitgestellt werden.

Wie bereits erwähnt mag dem Vorgang einer Ladungsverschiebung oder Ladungsausgleich ein Spannungsausgleich zugrunde liegen. Der Hintergrund, weshalb ein Spannungsausgleich oder Ladungsausgleich innerhalb eines Batteriesystems bzw. zwischen zwei Zellen eines Zellverbunds sinnvoll sein mag, mag darin bestehen, dass die Zellen in dem Batteriesystem unterschiedlich stark sein mögen. So mag beispielsweise eine stärkere Zelle beim Laden eine niedrigere Spannung aufweisen als eine schwächere Zelle, da bei der schwächeren Zelle die Menge an chemisch speicherbarer Energie früher erreicht sein mag und damit die Gefahr eines Überladens der schwächeren Zelle bestehen mag. Umgekehrt mag die Spannung einer schwächeren Zelle beim Entladen des Batteriesystems schneller abfallen, was ohne Ladungsausgleich von der stärkeren Zelle zu der schwächeren Zelle zu einer Verkürzung der Entladezeit des Batteriesystems führen mag, welche nicht erwünscht ist. Es mag weiterhin erwünscht sein, den Ladungsausgleich so zu gestalten, dass ein Wirkungsgrad und/oder eine Geschwindigkeit mit dem der Ladungsausgleich geschieht, verbessert werden mag.

Gemäß einem weiteren Aspekt wird Batteriesystem mit einer Ladungsausgleichsschaltung geschaffen, wobei das Batteriesystem aufweist: Einen Zellverbund mit zwei oder mehrerer Zellen, wobei die zwei Zellen jeweils eine Zellenruhespannung haben, eine Ladungsausgleichsschaltung, welche in einen ersten Zustand und einen zweiten Zustand bringbar ist und einen Energiezwischenspeicher. Die Ladungsausgleichsschaltung ist zwischen den Zellverbund und den Energiezwischenspeicher geschaltet und das Batteriesystem ist derart eingerichtet, dass der Energiezwischenspeicher mittels der Ladungsausgleichsschaltung im ersten Zustand aufladbar ist. Ferner ist das Batteriesystem derart eingerichtet, dass der Energiezwischenspeicher, wenn sich die Ladungsausgleichsschaltung im zweiten Zustand befindet, eine Aufladespannung aufweist, mittels welcher eine Zelle des Zellverbundes aufladbar ist. Weiterhin ist die Aufladespannung des Energiezwischenspeichers höher als beide der Zellenruhespannungen.

Gemäß dem weiteren Aspekt wird ein Batteriesystem dadurch beschrieben, dass infolge von zwei unterschiedlichen Zuständen der Ladungsausgleichsschaltung des Batteriesystems, ein Energiezwischenspeicher im ersten Zustand aufladbar und im zweiten Zustand entladbar sein mag. Im ersten Zustand mag der Energiezwischenspeicher von zwei unterschiedlichen Zellenruhespannungen aufladbar sein. Im zweiten Zustand mag sich der Energiezwischenspeicher im aufgeladenen Zustand befinden und eine Aufladespannung aufweisen, welche höher ist als jede der zwei unterschiedlichen Zellenruhespannungen. Insbesondere mag das Aufladen mittels einer Vielzahl von Zellen mit unterschiedlichen Zellenruhespannungen erfolgen.

Gemäß einem weiteren Ausführungsbeispiel wird ein Verfahren geschaffen, welches ferner aufweist: Laden des Energiezwischenspeichers über die Ladungsausgleichsschaltung im ersten Zustand mittels der zwei Zellen, wobei die zwei Zellen in Serie geschaltet sind.

In dem Batteriesystem mögen zwei oder mehrere Zellen in Serie geschaltet sein. Dies mag mittels eines elektrischen Leistungspfads geschehen. Der Begriff "elektrischer Leistungspfad" mag dabei einen Ladungstransportpfad beschreiben. Über den elektrischen Leistungspfad mögen die Zellen des Batteriesystems miteinander in Serie gekoppelt sein. Über den elektrischen Leistungspfad mögen insbesondere das Laden und/oder das Entladen des Batteriesystems erfolgen. Die in Reihe geschalteten Zellen mögen so miteinander seriell gekoppelt sein, dass die Anode einer Zelle mit der Kathode einer weiteren Zelle über den elektrischen Leistungspfad gekoppelt sein mag. Über den elektrischen Leistungspfad mag das Batteriesystem insgesamt geladen und/oder entladen werden, so dass sich die gespeicherte Gesamtenergiemenge des Batteriesystems ändern mag.

Insgesamt mag also die Spannung, welche zwischen zwei, drei oder mehreren Zellen abgreifbar sein mag, höher sein, als dies für nur eine Zelle der Fall ist. Damit mag im ersten Zustand der Ladungsausgleichsschaltung gegeben sein, dass die am Energiezwischenspeicher bereitgestellte Aufladespannung höher ist, als jede der beiden Zellenruhespannungen. Wenn drei oder mehrere Zellen mittels des Leistungspfads in Serie geschaltet sind, mag die bereitgestellte Aufladespannung, welche mittels den entsprechenden drei oder mehreren Zellen in Serie geschalteten generiert wird, höher sein, als jede der einzelnen drei oder mehreren Zellenruhespannungen.

Gemäß einem weiteren Ausführungsbeispiel wird ein Verfahren geschaffen, welches ferner aufweist: Laden des Energiezwischenspeichers, welcher zwei Teilspeicher aufweist, die im ersten Zustand der Ladungsausgleichsschaltung in einer Parallelschaltung gekoppelt sind, und Aufladen der einen Zelle mittels des Energiezwischenspeichers, wobei im zweiten Zustand der Ladungsausgleichsschaltung die zwei Teilspeicher in einer Reihenschaltung gekoppelt sind.

In ihren beiden Zuständen mag die Ladungsausgleichsschaltung den Energiezwischenspeicher so koppeln, dass in ihrem ersten Zustand die zwei Teilspeicher des Energiezwischenspeichers parallel gekoppelt sind und in ihrem zweiten Zustand die zwei Teilspeicher des Energiezwischenspeichers seriell gekoppelt sein mögen. Durch einen Wechsel der Koppelung der beiden Teilspeicher von einer Parallelschaltung zu einer Seriellschaltung mag also die Spannung erhöht werden. Die so generierte Aufladespannung, welche dem Aufladen einer Zelle dient, mag also höher sein, als die beiden zugrunde liegenden Zellenruhespannungen.

Insbesondere mögen in dem ersten Zustand der Ladungsausgleichsschaltung eine, zwei oder mehrere in Serie geschaltete Zellen den Energiezwischenspeicher, welcher zwei oder mehr parallel geschaltete Teilspeicher aufweist, aufladen. Im zweiten Zustand der Ladungsausgleichsschaltung mögen die Teilspeicher seriell geschaltet sein und eine Zelle aufladen. Insbesondere in dieser Kombination mag gelten, dass die Aufladespannung welche vor dem Entladen des Energiezwischenspeichers an der aufzuladenden Zelle anliegt, größer ist, als jede der einzelnen Zellenruhespannungen.

Gemäß einem weiteren Ausführungsbeispiel wird ein Verfahren geschaffen, wobei der Energiezwischenspeicher eine Kapazität aufweist.

Insbesondere mag die Kapazität mittels eines Kondensators realisiert sein. Auch mag jeder der Teilspeicher ein Kondensator sein. Die Art des Kondensators mag variieren, so dass je nach Anwendung alle Arten aktuell bekannter Kondensatoren verwendbar sein mögen.

Gemäß einem weiteren Ausführungsbeispiel wird ein Verfahren geschaffen, wobei die Ladungsausgleichsschaltung einen Transistor aufweist.

Die Ladungsausgleichsschaltung mag in zwei Zustände bringbar sein, wobei ein Wechsel von ihrem ersten Zustand in ihren zweiten Zustand mittels einer beliebigen Anzahl von Schaltern realisiert sein mag. Insbesondere mögen sich Transistoren als Schalter eignen, da die Transistoren mittels einer Steuereinheit elektronisch ansteuerbar sein mögen. Damit mag die Ladungsausgleichsschaltung mittels der Steuereinheit beliebig ansteuerbar sein. Insbesondere mag die Steuereinheit hardware- und/oder softwarebasiert realisiert sein. Insbesondere mag die Ladungsausgleichsschaltung auf einem ASIC beruhen.

Gemäß einem Ausführungsbeispiel wird ein Batteriesystem geschaffen, wobei die Ladungsausgleichsschaltung derart eingerichtet ist, dass der Energiezwischenspeicher in ihrem ersten Zustand mittels zweier in Serie geschalteter Zellen aufladbar ist.

Insbesondere mag das Batteriesystem eine beliebige Anzahl von in Serie geschalteten Zellen aufweisen, mittels welcher der Energiezwischenspeicher aufgeladen werden mag.

Gemäß einem weiteren Ausführungsbeispiel wird ein Batteriesystem geschaffen, wobei die Ladungsausgleichsschaltung derart eingerichtet ist, dass in ihrem ersten Zustand zwei in einer Parallelschaltung gekoppelte Teilspeicher des Energiezwischenspeichers aufladbar sind, und in ihrem zweiten Zustand die Teilspeicher in einer Reihenschaltung gekoppelt sind.

Insbesondere mag der Energiezwischenspeicher mehr als zwei Teilspeicher aufweisen, welche im ersten Zustand der Ladungsausgleichsschaltung aufgeladen werden mögen. Im zweiten Zustand der Ladungsausgleichsschaltung mögen alle oder zumindest ein Teil der mehreren Teilspeicher in Serie geschaltet sein.

Insbesondere mag damit der Energiezwischenspeicher im ersten Zustand der Ladungsausgleichsschaltung von mehreren in Serie geschalteten Zellen aufladbar sein. Der Energiezwischenspeicher mag hierbei eine Mehrzahl von parallel geschalteten Teilspeichern aufweisen. Im zweiten Zustand der Ladungsausgleichsschaltung mögen alle oder zumindest ein Teil der Teilspeicher in Serie geschaltet sein, um die Aufladespannung bereitzustellen, mittels welcher die aufzuladende Zelle aufgeladen wird.

Gemäß einem weiteren Ausführungsbeispiel wird ein Batteriesystem geschaffen, wobei der Energiezwischenspeicher eine Kapazität aufweist. Insbesondere mögen die Teilspeicher jeweils mittels eines Kondensators gebildet sein.

Gemäß einem weiteren Ausführungsbeispiel wird ein Batteriesystem geschaffen, wobei die Ladungsausgleichsschaltung einen Transistor aufweist.

Zusammenfassend mag festgestellt werden, dass das Umladen der Zellen über einen Kondensator beibehalten werden mag. Jedoch mögen zum Laden des Kondensators zwei oder mehrere Zellen in Serie auf den Kondensator geschaltet sein. Damit mag sich die Spannung, welche auch als Aufladespannung bezeichnet werden mag, und ein Energieinhalt um ein vielfaches erhöhen, da die Spannung quadratisch in die im Kondensator enthaltene Energie einfließen mag.

Weiterhin mag festgestellt werden, dass alternativ oder zusätzlich zwei oder mehrere, einzelne oder parallele Kondensatoren geladen werden mögen. Im Anschluss mögen die beiden Kondensatoren in eine Serienschaltung gebracht werden. Damit mag sich die Spannung über die beiden Kondensatoren verdoppeln und es mag mehr Ladung an eine Zelle übertragen werden können.

Durch die drastische Erhöhung des Wirkungsgrades und der Umladegeschwindigkeit mag ein Ladungsausgleich über Kondensatoren erst sinnvoll und ökonomisch möglich sein.

Beispielsweise mag ein Vergleich der Energiemenge mit einer bzw. neun Zellen berechnet werden:
1) Neun Zellen mit 3,05 V und eine Zelle mit 3,00 V. Die übertragene Leistung bzw. Energie mit 1 µF mag 0,5.10⁻⁶*F*·[6·((3,00*V*)²-(9·3,05*V*)²)]=372*µJ* betragen.
2) Bei einer Zelle mit 3,05 V zu einer Zelle mit 3,00 V mag die Energiemenge nur 151 nJ betragen.
mag entweder der Ladungsausgleich um den oben genannten Faktor beschleunigt sein oder der Kondensator mag um den oben genannten Faktor verkleinert werden.

Es wird darauf hingewiesen, dass Ausführungsformen der Erfindung mit Bezug auf unterschiedliche Erfindungsgegenstände beschrieben wurden. Insbesondere sind einige Ausführungsformen der Erfindung mit Verfahrensansprüchen und andere Ausführungsformen der Erfindung mit Vorrichtungsansprüchen beschrieben. Dem Fachmann wird jedoch bei der Lektüre dieser Anmeldung sofort klar werden, dass, sofern nicht explizit anders angegeben, zusätzlich zu einer Kombination von Merkmalen, die zu einem Typ von Erfindungsgegenstand gehören, auch eine beliebige Kombination von Merkmalen möglich ist, die zu unterschiedlichen Kategorien oder Typen von Erfindungsgegenständen gehören.

Weitere Vorteile und Merkmale der vorliegenden Erfindung ergeben sich aus der folgenden beispielhaften Beschreibung von zwei derzeit bevorzugten Ausführungsformen. Die Figuren dieser Anmeldung sind lediglich schematisch. Auch mögen die den Figuren zugrunde liegenden Schaltungen abwandelbar sein. Insbesondere mögen die den Figuren zugrunde liegenden Schaltungen kombinierbar sein.

Figur 1 zeigt die schematische Darstellung eines Batteriesystems mit drei in Reihe geschalteten Zellen

Figur 2 zeigt die schematische Darstellung eines Batteriesystems mit einem Energiezwischenspeicher, welcher parallel und seriell schaltbare Kapazitäten aufweist

Es wird darauf hingewiesen, dass die nachfolgend beschriebenen Ausführungsformen lediglich eine beschränkte Auswahl an möglichen Ausführungsvarianten darstellen. Insbesondere ist es möglich, die beschriebene Merkmale einzelner Ausführungsformen in geeigneter Weise miteinander zu kombinieren, so dass für den Fachmann mit den hier explizit dargestellten Ausführungsvarianten eine Vielzahl von verschiedenen Ausführungsformen als offensichtlich offenbart anzusehen sind.

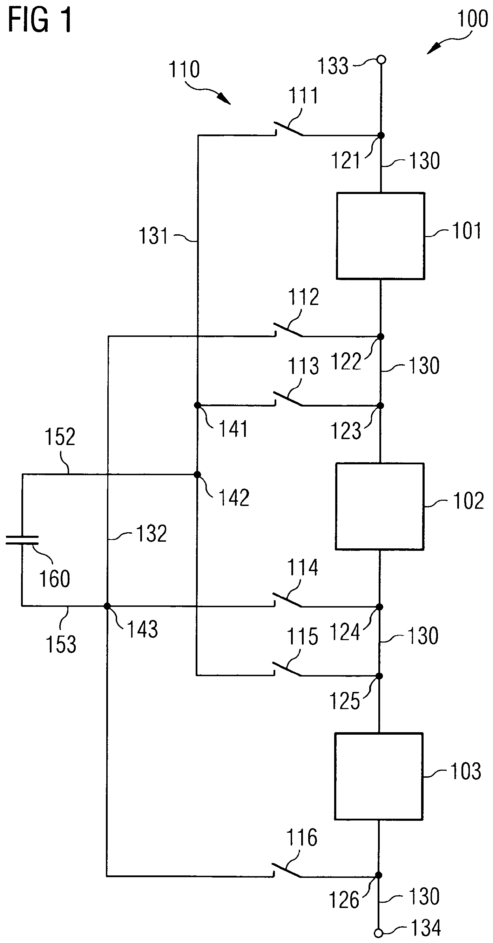

Figur 1 zeigt ein Batteriesystem 100, welches drei in Reihe geschaltetes Zellen 101, 102, 103 aufweisen mag. Selbstverständlich mag das Batteriesystem mehr als drei Zellen aufweisen. Die drei Zellen 101, 102, 103 mögen mittels eines elektrischen Leistungspfads 130 in einer gängigen Weise seriell geschaltet sein, so dass die Kathode einer ersten Zelle mit der Anode einer weiteren Zelle gekoppelt sein mag. Ein erstes Ende des elektrischen Leistungspfads 130 mag einen Pluspol 133 und ein zweites Ende des elektrischen Leistungspfads 130 mag einen Minuspol 134 darstellen. An einem Enden des elektrischen Leistungspfads 130 mag ein Pluspol 191 und am anderen Ende des elektrischen Leistungspfads mag ein Minuspol 192 angeordnet sein. Ein Knotenpunkt 121 mag die Zelle 101 kathodenseitig mit einem Schalter 111 koppeln und ein Knotenpunkt 122 mag die Zelle 101 anodenseitig mit einem Schalter 112 koppeln. Ein Knotenpunkt 123 mag die Zelle 102 kathodenseitig mit einem Schalter 113 koppeln und ein Knotenpunkt 124 mag die Zelle 102 anodenseitig mit einem Schalter 114 koppeln. Ein weiterer Knotenpunkt 125 mag die Zelle 103 kathodenseitig mit einem Schalter 115 koppeln und ein Knotenpunkt 126 mag die Zelle 103 anodenseitig mit einem Schalter 116 koppeln. Die Schalter 111, 112, 113, 114, 115, 116 mögen zusammen eine Ladungsausgleichsschaltung 110 bilden oder Teil einer solchen sein.

Der Schalter 111 und der Schalter 113 mögen an einen Knotenpunkt 141 koppeln, welcher, wie der Schalter 115, an einen weiteren Knotenpunkt 142 koppeln mag. Der Knotenpunkt 142 mag mittels einer Leitung 152 zu einem ersten Pol des Kondensators 160 koppeln. Zwischen dem Schalter 111 und dem Schalter 115, welche durch eine Leitung 131 gekoppelt sein mögen, mögen also der Knotenpunkt 141 und der Knotenpunkt 142 liegen.

Der Schalter 114 und der Schalter 116 mögen beide zu einem Knotenpunkt 143 koppeln, zu welchem auch der Schalter 112 über eine Leitung 132 koppeln mag. Der Knotenpunkt 143 mag mittels einer Leitung 153 zu einem zweiten Pol des Kondensators 160 koppeln.

Die Leitung 131 und die Leitung 132 mögen einen Bus darstellen.

Bei einem geschlossenen Schalter 111 und einem geschlossenen Schalter 116 mag eine Aufladespannung am Kondensator 160 anliegen, welche von den in Reihe geschalteten Zellen 101, 102 und 103 stammt. Damit mag sich an dem Kondensator 160 eine Aufladespannung ausbilden, welche höher ist, als jede der drei Zellenruhespannungen, welche jeweils von den drei einzelnen Zellen 101, 102 und 103 aufgebracht werden mag. Die Schalter 112, 113, 114 und 115 mögen geöffnet sein. Diese Schaltung der Schalter bzw. der Ladungsausgleichschaltung mag einem Ladezustand des Kondensators entsprechen.

Nach einem Öffnen der Schalter 111 und 116 mag an dem Kondensator 160, welcher auch als Energiezwischenspeicher bezeichnet werden mag, die Aufladespannung anliegen.

Nachfolgend kann in einem Entladezustand des Kondensators eine gewünschte Zelle geladen werden. Beispielsweise wird bei einem Schließen der Schalter 113 und 114 die Zelle 102 mittels der Aufladespannung, welche in diesem Zustand zwischen der Anode bzw. Kathode der Zelle 102 anliegt, geladen werden.

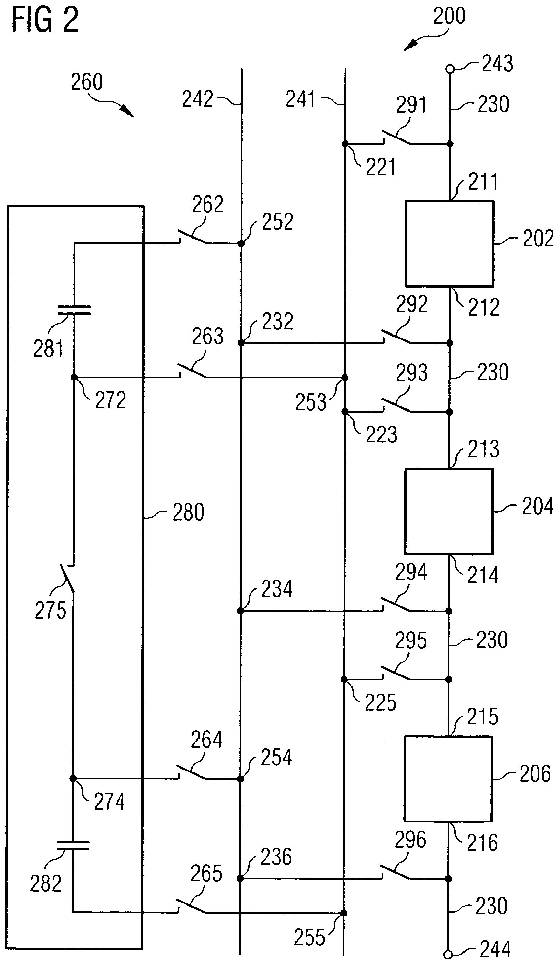

Figur 2 zeigt ein Batteriesystem 200, welches einen Energiezwischenspeicher 280 und drei Zellen 202, 204, 206 aufweist. Eine Kathode 211 der Zelle 202 mag über einen Schalter 291 mittels eines Knotenpunkts 221 an einen ersten Aufladepfad 241 koppeln. In einer analogen Weise mag ebenfalls eine Kathode 213 der Zelle 204 über einen Schalter 293 mittels eines Knotenpunkts 223 an den ersten Aufladepfad 241 koppeln. Schließlich mag auch eine Kathode 215 der Zelle 206 über einen Schalter 295 mittels eines Knotenpunkts 225 an den ersten Aufladepfad 241 koppeln. Drei Anoden 212, 214 und 216 der entsprechenden Zellen 202, 204 bzw. 206 mögen über entsprechende Schalter 292, 294 bzw. 296 mittels entsprechender Knotenpunkte 232, 234 bzw. 236 an einen zweiten Aufladepfad 242 koppeln. Die Zellen 202, 204, 206 mögen auf gängige Weise mittels eines elektrischen Leistungspfads 230 gekoppelt sein, wobei die Anode einer ersten Zelle mit der Kathode einer zweiten Zelle gekoppelt sein mag. Ein erstes Ende des elektrischen Leistungspfads 230 mag einen Pluspol 243 und ein zweites Ende des elektrischen Leistungspfads 230 mag einen Minuspol 244 darstellen.

Alternativ mag auf eine Gruppe der Schalter 291, 293 und 295 und der Schalter 292, 294, 296 verzichtet werden. Die folgenden Ausführungen mögen jedoch die beiden Gruppen der Schalter 291, 293 und 295 und der Schalter 292, 294, 296 einbeziehen.

Ein Schalter 262 mag über einen Knotenpunkt 252, welcher an den zweiten Aufladepfad 242 gekoppelt ist, eine schaltbare Koppelung zu einem ersten Pol eines ersten Kondensators 281 herstellen.

Ein Schalter 263 mag über einen Knotenpunkt 253, welcher an den ersten Aufladepfad 241 gekoppelt sein mag, eine schaltbare Koppelung via einen Knotenpunkt 272 zu einem zweiten Pol des ersten Kondensators 281 herstellen. Somit mag also der Knotenpunkt 272 an den zweiten Pol des ersten Kondensators 281 koppeln.

Ein Schalter 264 mag über einen Knotenpunkt 254, welcher an den zweiten Aufladepfad 242 gekoppelt sein mag, eine schaltbare Koppelung via einen Knotenpunkt 274 zu einem ersten Pol eines zweiten Kondensators 282 herstellen. Somit mag also der Knotenpunkt 274 an den ersten Pol des zweiten Kondensators 282 koppeln.

Ein Schalter 265 mag über einen Knotenpunkt 255, welcher an den ersten Aufladepfad 241 gekoppelt sein mag, eine schaltbare Koppelung zum zweiten Pol des zweiten Kondensators 282 herstellen.

Zwischen dem Knotenpunkt 272 und dem Knotenpunkt 274 mag ein Schalter 275 gekoppelt sein, welcher eine schaltbare Verbindung zwischen dem zweiten Pol des ersten Kondensators 281 und dem ersten Pol des zweiten Kondensators 282 herstellen mag.

Die Schalter 262, 263, 264, 265, 275, 291, 292, 293, 294, 295 und 296 mögen zusammen eine Ladungsausgleichsschaltung 260 bilden. Der Kondensator 281 und der Kondensator 282 mögen zusammen den Energiezwischenspeicher 280 bilden.

Zur Erläuterung eines Aufladevorganges des Zwischenspeichers 280, d.h. der beiden Kondensatoren 281 und 282 wird von einer Stellung der Ladungsausgleichspannung ausgegangen, in der alle Schalter 262, 263, 264, 265, 275, 291, 292, 293, 294, 295 und 296 geöffnet sein mögen. Dann mögen die Schalter 291, 292, 293, 294, 295 und 296 geschlossen werden. Beim Schließen der Schalter 262 und 263 mag der erste Kondensator 281 von den Zellen 202, 204 und 206 geladen werden. Beim Schließen der Schalter 264 und 265, welches gleichzeitig mit den geschlossenen Schaltern 262 und 263 oder nach einem erneuten Öffnen der Schalter 262 und 263 erfolgen mag, mag der zweite Kondensator 282 von den Zellen 202, 204 und 206 geladen werden. Alternativ mögen die beiden oder auch nur einer der beiden Kondensatoren mittels einer entsprechenden der Schalter auch nur von einer einzelnen oder einer Untermenge von Zellen des Zellverbundes geladen werden.

Damit mögen die parallel geschalteten Kondensatoren 281 und 282 von den Zellen 202, 204 und 206 aufgeladen werden. Dieser Schaltungszustand der Ladeausgleichsschaltung 260 mag dem ersten Zustand der Ladeausgleichsschaltung 260 entsprechen.

Zur Erläuterung eines Entladevorganges des Zwischenspeichers 280, d.h. der beiden Kondensatoren 281 und 282 wird wiederum von einer Stellung der Ladungsausgleichspannung ausgegangen, in der alle Schalter 262, 263, 264, 265, 275, 291, 292, 293, 294, 295 und 296 wieder geöffnet sein mögen. Der Kondensator 281 und der Kondensator 282 mögen sich in einem aufgeladenen Zustand befinden.

Beim Schließen des Schalters 275 mögen die Kondensatoren 281 und 282 nun in Serie geschaltet sein. Der erste Pol des ersten Kondensators 281 mag hierbei an den zweiten Aufladepfad 242 koppeln und der zweite Pol des zweiten Kondensators 282 mag an den ersten Aufladepfad 241 koppeln, wenn die entsprechenden Schalter 262 und 265 geschlossen sind.

Mit Schließen des Schalter 291 und des Schalters 292 mag die erste Zelle 202 mit der Aufladespannung der in Serie geschalteten Kondensatoren 281 und 282 aufgeladen werden. Dies mag einem zweiten Zustand der Ladungsausgleichsschaltung 260 entsprechen. Alternativ oder ergänzend mögen auch die Schalter 293 und 294 geschlossen werden um die Zelle 204 aufzuladen bzw. mögen die Schalter 295 und 296 geschlossen werden um die Zelle 206 aufzuladen.

Jede Kombination von paarweise geschlossenen Schaltern 291 und 292, 293 und 294 bzw. 295 und 296 mag damit dem zweiten Zustand der Ladungsausgleichsschaltung 260 entsprechen, bei welchem mittels der in Serie geschalteten Kondensatoren 281 und 282 des Energiezwischenspeichers 280 eine Aufladespannung an den jeweiligen Zellen 202, 204 bzw. 206 anliegt, welche höher ist, als jede der Zellenruhespannungen der Zellen 202, 204 und 206.

### Bezugszeichenliste

- 100: Batteriesystem
- 101: Zelle
- 102: Zelle
- 103: Zelle
- 111: Schalter
- 112: Schalter
- 113: Schalter
- 114: Schalter
- 115: Schalter
- 116: Schalter
- 121: Knotenpunkt
- 122: Knotenpunkt
- 123: Knotenpunkt
- 124: Knotenpunkt
- 125: Knotenpunkt
- 126: Knotenpunkt
- 130: Leistungspfad
- 131: Leitung
- 132: Leitung
- 133: Pluspol
- 134: Minuspol
- 141: Knotenpunkt
- 142: Knotenpunkt
- 143: Knotenpunkt
- 152: Leitung
- 153: Leitung
- 160: Kondensator
- 130: elektrischer Leistungspfad
- 191: Pluspol
- 192: Minuspol
- 200: Batteriesystem
- 202: Zelle
- 204: Zelle
- 206: Zelle
- 211: Kathode
- 212: Anode
- 213: Kathode
- 214: Anode
- 215: Kathode
- 216: Anode
- 221: Knotenpunkt
- 223: Knotenpunkt
- 225: Knotenpunkt
- 230: elektrischer Leistungspfad
- 232: Knotenpunkt
- 234: Knotenpunkt
- 236: Knotenpunkt
- 241: erster Aufladepfad
- 242: zweiter Aufladepfad
- 243: Pluspol
- 244: Minuspol
- 252: Knotenpunkt
- 253: Knotenpunkt
- 254: Knotenpunkt
- 255: Knotenpunkt
- 272: Knotenpunkt
- 274: Knotenpunkt
- 275: Schalter
- 280: Energiezwischenspeicher
- 281: Kondensator
- 282: Kondensator
- 291: Schalter
- 292: Schalter
- 293: Schalter
- 294: Schalter
- 295: Schalter
- 296: Schalter

## Patentansprüche

1. Verfahren zum Ladungsausgleich zwischen zwei Zellen (101, 102, 103, 202, 204, 206) eines Zellverbundes eines Batteriesystems (100, 200), welche jeweils eine Zellenruhespannung haben, mit einer Ladungsausgleichsschaltung (110, 260) und einem Energiezwischenspeicher (160, 280), der eine Kapazität aufweist, wobei die Ladungsausgleichsschaltung (110, 260) zwischen den Zellverbund und den Energiezwischenspeicher (160, 280) geschaltet ist, wobei das Verfahren aufweist:
Bringen der Ladungsausgleichsschaltung (110, 260) in einen ersten Zustand, in welchem der Energiezwischenspeicher (160, 280) über die Ladungsausgleichsschaltung (110, 260) geladen wird und
Bringen der Ladungsausgleichsschaltung (110, 260) in einen zweiten Zustand, in welchem der Energiezwischenspeicher (160, 280) eine der zwei Zellen (101, 102, 103, 202, 204, 206) mittels einer bereitgestellten Aufladespannung auflädt,
wobei die mittels des Energiezwischenspeichers (160, 280) an der einen Zelle (101, 102, 103, 202, 204, 206) bereitgestellte Aufladespannung höher als jede der beiden Zellenruhespannungen ist, wobei das Verfahren ferner umfasst:
Laden des Energiezwischenspeichers (160, 280) über die Ladungsausgleichsschaltung (110, 260) im ersten Zustand mittels der zwei Zellen (101, 102, 103, 202, 204, 206), welche in Serie geschaltet sind, wobei hierbei der Energiezwischenspeicher (160, 280) zwei Teilspeicher (281, 282) aufweist, die im ersten Zustand der Ladungsausgleichsschaltung (110, 260) in einer Parallelschaltung gekoppelt sind, und
Aufladen der einen Zelle (101, 102, 103, 202, 204, 206) mittels des Energiezwischenspeichers (160, 280), wobei im zweiten Zustand der Ladungsausgleichsschaltung (110, 260) die zwei Teilspeicher (281, 282) in einer Reihenschaltung gekoppelt sind.

2. Verfahren nach Anspruch 1,
wobei die Ladungsausgleichsschaltung (110, 260) einen Transistor aufweist.

3. Batteriesystem (100, 200) mit einer Ladungsausgleichsschaltung (110, 260), wobei das Batteriesystem (100, 200) aufweist:
einen Zellverbund mit zwei Zellen (101, 102, 103, 202, 204, 206), wobei die zwei Zellen (101, 102, 103, 202, 204, 206) jeweils eine Zellenruhespannung haben,
eine Ladungsausgleichsschaltung (110, 260), welche in einen ersten Zustand und einen zweiten Zustand bringbar ist und
einen Energiezwischenspeicher (160, 280), der eine Kapazität aufweist,
wobei die Ladungsausgleichsschaltung (110, 260) zwischen den Zellverbund und den Energiezwischenspeicher (160, 280) geschaltet ist,
wobei das Batteriesystem (100, 200) derart eingerichtet ist, dass der Energiezwischenspeicher (160, 280) mittels der Ladungsausgleichsschaltung (110, 260) im ersten Zustand aufladbar ist,
wobei das Batteriesystem (100, 200) derart eingerichtet ist, dass der Energiezwischenspeicher (160, 280), wenn sich die Ladungsausgleichsschaltung (110, 260) im zweiten Zustand befindet, eine Aufladespannung aufweist, mittels welcher eine Zelle (101, 102, 103, 202, 204, 206) des Zellverbundes aufladbar ist und
wobei die Aufladespannung des Energiezwischenspeichers (160, 280) höher ist, als beide der Zellenruhespannungen **dadurch gekennzeichnet, dass**
die Ladungsausgleichsschaltung (110, 260) derart eingerichtet ist, dass in ihrem ersten Zustand zwei in einer Parallelschaltung gekoppelte Teilspeicher (281, 282) des Energiezwischenspeichers (160, 280) aufladbar sind, und in ihrem zweiten Zustand die Teilspeicher (281, 282) in einer Reihenschaltung gekoppelt sind.

4. Batteriesystem (100, 200) nach Anspruch 3, wobei die Ladungsausgleichsschaltung (110, 260) einen Transistor aufweist.

## Claims

1. Method for charge equalization between two cells (101, 102, 103, 202, 204, 206) of a cell cluster of a battery system (100, 200) that respectively have a cell quiescent voltage, having a charge equalization circuit (110, 260) and an energy buffer store (160, 280) that has a capacitance, wherein the charge equalization circuit (110, 260) is connected between the cell cluster and the energy buffer store (160, 280), the method involving:
putting the charge equalization circuit (110, 260) into a first state in which the energy buffer store (160, 280) is charged via the charge equalization circuit (110, 260) and
putting the charge equalization circuit (110, 260) into a second state in which the energy buffer store (160, 280) charges one of the two cells (101, 102, 103, 202, 204, 206) by means of a provided charging voltage,
wherein the charging voltage provided on the one cell (101, 102, 103, 202, 204, 206) by means of the energy buffer store (160, 280) is higher than each of the two cell quiescent voltages, the method further involving:
charging the energy buffer store (160, 280) via the charge equalization circuit (110, 260) in the first state by means of the two cells (101, 102, 103, 202, 204, 206), which are connected in series, wherein in this case the energy buffer store (160, 280) has two memory elements (281, 282) that are coupled in a parallel connection in the first state of the charge equalization circuit (110, 260), and
charging the one cell (101, 102, 103, 202, 204, 206) by means of the energy buffer store (160, 280), wherein the two memory elements (281, 282) are coupled in a series connection in the second state of the charge equalization circuit (110, 260).

2. Method according to Claim 1,
wherein the charge equalization circuit (110, 260) has a transistor.

3. Battery system (100, 200) having a charge equalization circuit (110, 260), wherein the battery system (100, 200) has: a cell cluster having two cells (101, 102, 103, 202, 204, 206), wherein the two cells (101, 102, 103, 202, 204, 206) respectively have a cell quiescent voltage,
a charge equalization circuit (110, 260) that can be put into a first state and a second state and
an energy buffer store (160, 280) that has a capacitance,
wherein the charge equalization circuit (110, 260) is connected between the cell cluster and the energy buffer store (160, 280),
wherein the battery system (100, 200) is set up such that the energy buffer store (160, 280) can be charged by means of the charge equalization circuit (110, 260) in the first state,
wherein the battery system (100, 200) is set up such that the energy buffer store (160, 280), when the charge equalization circuit (110, 260) is in the second state, has a charging voltage by means of which a cell (101, 102, 103, 202, 204, 206) of the cell cluster can be charged and
wherein the charging voltage of the energy buffer store (160, 280) is higher than both of the cell quiescent voltages, **characterized in that**
the charge equalization circuit (110, 260) is set up such that in its first state it is possible for two memory elements (281, 282) of the energy buffer store (160, 280) that are coupled in a parallel connection to be charged, and in its second state the memory elements (281, 282) are coupled in a series connection.

4. Battery system (100, 200) according to Claim 3, wherein the charge equalization circuit (110, 260) has a transistor.

## Revendications

1. Procédé destiné à la compensation de charge entre deux cellules (101, 102, 103, 202, 204, 206) d'un groupe de cellules d'un système de batteries (100, 200), lesquelles présentent respectivement une tension de repos des cellules, avec un circuit de compensation de charge (110, 260) et un accumulateur intermédiaire d'énergie (160, 280), lequel présente une capacité ;
dans lequel le circuit de compensation de charge (110, 260) est mis en circuit entre le groupe de cellules et l'accumulateur intermédiaire d'énergie (160, 280) ;
dans lequel le procédé présente :
la mise en place du circuit de compensation de charge (110, 260) dans un premier état, dans lequel l'accumulateur intermédiaire d'énergie (160, 280) est chargé par l'intermédiaire du circuit de compensation de charge (110, 260) ; et
la mise en place du circuit de compensation de charge (110, 260) dans un deuxième état, dans lequel l'accumulateur intermédiaire d'énergie (160, 280) charge l'une des deux cellules (101, 102, 103, 202, 204, 206) au moyen d'une tension de charge mise à disposition ;
dans lequel la tension de charge mise à disposition au niveau de l'une des cellules (101, 102, 103, 202, 204, 206) au moyen de l'accumulateur intermédiaire d'énergie (160, 280) est supérieure à chacune des deux tensions de repos des cellules ;
dans lequel le procédé comprend en outre :
le chargement de l'accumulateur intermédiaire d'énergie (160, 280) dans un premier état, par l'intermédiaire du circuit de compensation de charge (110, 260), au moyen des deux cellules (101, 102, 103, 202, 204, 206), lesquelles sont montées en série, dans lequel l'accumulateur intermédiaire d'énergie (160, 280) présente à cet effet deux accumulateurs partiels (281, 282), lesquels sont couplés, dans une connexion en parallèle, dans le premier état du circuit de compensation de charge (110, 260) ; et
le chargement de l'une des cellules (101, 102, 103, 202, 204, 206) au moyen de l'accumulateur intermédiaire d'énergie (160, 280), dans lequel les deux accumulateurs partiels (281, 282) sont couplés, dans une connexion en série, dans le deuxième état du circuit de compensation de charge (110, 260).

2. Procédé selon la revendication 1,
dans lequel le circuit de compensation de charge (110, 260) présente un transistor.

3. Système de batteries (100, 200) avec un circuit de compensation de charge (110, 260),
dans lequel le système de batteries (100, 200) présente :
un groupe de cellules avec deux cellules (101, 102, 103, 202, 204, 206), dans lequel les deux cellules (101, 102, 103, 202, 204, 206) présentent respectivement une tension de repos des cellules ;
un circuit de compensation de charge (110, 260), lequel peut être amené dans un premier état et dans un deuxième état ; et un accumulateur intermédiaire d'énergie (160, 280) qui présente une capacité ;
dans lequel le circuit de compensation de charge (110, 260) est mis en circuit entre le groupe de cellules et l'accumulateur intermédiaire d'énergie (160, 280) ;
dans lequel le système de batteries (100, 200) est mis en place de telle sorte que l'accumulateur intermédiaire d'énergie (160, 280) peut être chargé dans le premier état au moyen du circuit de compensation de charge (110, 260) ;
dans lequel le système de batteries (100, 200) est mis en place de telle sorte que l'accumulateur intermédiaire d'énergie (160, 280), quand le circuit de compensation de charge (110, 260) se trouve dans le deuxième état, présente une tension de charge, au moyen de laquelle une cellule (101, 102, 103, 202, 204, 206) du groupe de cellules peut être chargée ; et
dans lequel la tension de charge de l'accumulateur intermédiaire d'énergie (160, 280) est supérieure aux deux tensions de repos des cellules ;
**caractérisé en ce que**
le circuit de compensation de charge (110, 260) est mis en place de telle sorte que les deux accumulateurs partiels (281, 282) de l'accumulateur intermédiaire d'énergie (160, 280) peuvent être chargés, lesquels sont couplés dans une connexion en parallèle dans leur premier état, et les accumulateurs partiels (281, 282) sont couplés dans une connexion en série dans leur deuxième état.

4. Système de batteries (100, 200) selon la revendication 3, dans lequel le circuit de compensation de charge (110, 260) présente un transistor.
